# EUROPEAN PATENT SPECIFICATION

(11) **EP 1 753 651 B1**
(45) Date of publication and mention of the grant of the patent: **10.06.2009**
(21) Application number: 05731965.9
(22) Date of filing: 08.04.2005
(51) Int. Cl.: B62D 25/20, B60R 13/01, B29B 7/58, B60P 3/04

(54) **FLOOR STRUCTURE**
BODENSTRUKTUR
STRUCTURE DE PLANCHER

(30) Priority: 09.06.2004 CA 2470538
(43) Date of publication of application: 21.02.2007
(73) Proprietor: Marquette, Dany, Boucherville, Quebec J4B 7T4 (CA)
(72) Inventor: Marquette, Dany, Boucherville, Quebec J4B 7T4 (CA)
(74) Representative: Wasmeier, Alfons
(86) International application number: PCT/CA2005/000542
(87) International publication number: WO 2005/120933

(56) References cited:
- WO-A1-03/043412
- CN-A- 1 560 118
- GB-A- 2 229 134
- JP-A- 3 049 947
- JP-A- 6 287 905
- US-A- 5 704 178
- US-A- 5 989 695

## Description

### FIELD OF THE INVENTION

The present invention relates to vehicles and more particularly, relates to a floor structure useful for vehicles such as trucks and trailers having a cargo carrying capacity.

### BACKGROUND OF THE INVENTION

The floor structure of vehicles designed to carry cargo will vary depending upon the end use thereof and the cargo which is to be transported. Generally, the vehicle will include structural components forming a portion of a frame structure and which is designed to carry or support a floor. The floor is conventionally formed of a metallic or wood material which is supported by the structural components. It is also known in the art to use various types of plastic and it is also known to provide inserts or liners which will sit on the original floor provided by the manufacturer of the vehicle.

As aforementioned, the particular floor can vary depending upon the cargo which will be carried. However, problems which are universally encountered include damage which can occur to the floor from impact. In the case of vehicles having a wood floor, the wood frequently breaks and must be replaced. Even with metallic floors, an impact can deform and even fracture the metal thereby necessitating replacement.

A further problem associated with conventional floors is that although the cargo is usually secured in place by means of various types of straps, any slight loosening of the straps will mean that the cargo is able to move and breakage or damage to the goods can occur.

A further problem which is not directly related to the above, is that of the disposing of or recycling used vehicle tires. These tires fill up disposal areas in garbage dumps and indeed, many end up littering the landscape. One very large problem is the possibility of fires which can occur in tire dumps. These fires are very difficult to put out and can cause substantial pollution of the water table during their attempts to do so.

There have been many uses which have been found for reusing the material in discarded tires including using the material for manufacture of various types of mats and landscaping devices. Thus, it has been proposed to use the material in railroad as landscaping ties, loading dock bumpers, and the like. The use of rubber fragments in manufacturing products is well known and thus, one may refer to United States Patent 4,343,669 issued August 10, 1992 to J.C. Prior which teaches a method of making a building component wherein shredded waste material forms an inner core and a sheet material provides a casing.

United States Patent 4,109,041 issued August 22, 1978 to Tellman teaches the use of rubber fragments in conjunction with a construction panel. The rubber is utilized as a coating for particle board in order to increase the surface friction of the board.

United States Patent 5,238,734 issued August 24, 1933 to Murray teaches the use of rubber fragments to make railroad ties. The fragments are mixed with an epoxy material.

United States Patent 5,316,708 issued May 31, 1994 to Drews discloses a method of making building blocks wherein the shredded material is mixed with latex, compressed and cured.

United States Patent 5,439,735 issued August 8, 1995 to Jamison teaches using scrap rubber and textile material to create particle board products having desired thermal and acoustical installation property. United States Patent 5,704,178 issued January 6, 1998 teaches the use of rubber fragments in building panels which are designed for use in house construction. The rubber panel comprises metal frame members having a metal mesh on the interior and rubber fragments on the exterior thereof. It is also known from WO 03/043412 to provide for a flowing surface for a holding yard or a pen wherein rubber chips are bonded together. The Applicant teaches providing different heights in the surface.

It is known from British Patent GB 2 229 134, published on September 9, 1990 to provide a floor for transport containers and vehicles, which includes a multi-layer structure comprised of a core of a wire framework and layers of curable material on each side thereof. In turn, these layers may be covered with fragmented material such as small pieces of metallic wire, synthetic string or threads impregnated with rubber. The final coating is a curable material.

The above mentioned 4B documents is disclosure has been taken as bass for the preamble of independent claims 1 and 12.

### SUMMARY OF THE INVENTION

It is an object of the present invention to provide a flooring product which is suitable for use on the floor of a cargo transporting vehicle and which flooring product is resistant to damage while providing other desirable physical characteristics.

It is a further object of the present invention to provide a flooring product which uses recycled rubber fragments.

According to one aspect of the present invention, there is provided a flooring product suitable for use on a vehicle, the flooring product comprising a base formed of a load bearing material, an upper layer formed of rubber fragments bonded together, the upper layer being secured to the base, the upper layer being formed of at least a first portion and a second portion, the first portion and the second portion each having a different hardness measurement.

According to a further aspect of the present invention, in a vehicle having a floor for receiving cargo, and wherein the floor is supported by structural members, the improvement wherein the floor comprises a lower layer and an upper layer, the lower layer being formed of a load bearing material selected from the group consisting of wood materials and metallic materials, the upper layer being adhesively secured to the lower layer, the upper layer being formed of rubber fragments bonded together.

As used herein, a vehicle is generally utilized to designate a cargo carrying vehicle. The vehicle may be a truck having a cargo carrying floor. It is also intended to include trailers such as those forming a portion of a tractor trailer unit.

The term rubber fragment, as utilized herein, will generally include both natural and synthetic rubbers and other suitable elastomeric materials having the desired physical properties.

The vehicle will have a structure wherein there is provided a frame and which frame will l usually include longitudinally extending frame members as well as transversely extending frame members. The floor is placed on top of these frame members and is suitably secured thereto.

The lower layer, as previously mentioned, may either be formed of a metallic or a wood material. In the case of a metallic material, aluminium is conventionally used although other metals and/or alloys thereof may be employed.

In the instance wherein wood is employed, it is generally a composite manufactured wood product and which would typically have a thickness of between 15 and 30 mm. The composite wood product would normally consist of layers of a product such as oriented strand board or plywood. Preferably, the underside is treated with a material to prevent moisture penetration therethrough and to this end, materials such as a fiberglass coating may be employed.

The upper layer, as previously mentioned, includes two different portions. In this regard, the outer portion may be formed of a rubber material which has a different hardness measurement compared to the hardness of the central portion. The outer portion is slightly softer or more compressible such that a greater load stability is achieved. Typically, the outer portion will have a hardness reading of between A65 to A75 as measured on a Shore Hardness Meter under ASTM D-2240, while the central portion will have a hardness reading of between A76 to A90. The specific gravity is preferably between 1.12 and 1.16. In a preferred embodiment, the upper layer will have a thickness of between 10 mm and 20 mm.

The outer portion may extend around the entire periphery or alternatively, only along sides and/or ends depending on the particular configuration of the vehicle and the intended use.

In a particularly preferred embodiment, the outer softer portions are formed to have a smooth surface while the inner portion will have a textured or embossed surface to give the same a non slip character.

### BRIEF DESCRIPTION OF THE DRAWINGS

Having thus generally described the invention, reference will be made to the accompanying drawings illustrating an embodiment thereof, in which:
- Figure 1: is a perspective view illustrating a vehicle (in phantom lines) having a floor structure;
- Figure 2: is top plan view, partially in cut-away, of the floor structure of the vehicle of Figure 1;
- Figure 3: is a cross sectional view taken along the lines 3-3 of Figure 2;
- Figure 4: is a cross sectional view taken along the lines 4-4 of Figure 2;
- Figure 5: is an enlarged view of the corner portion of the floor structure;
- Figure 6: is a perspective view of a tractor and trailer unit;
- Figure 7: is a top plan view, partially in cut-away, of the floor structure of the trailer of Figure 6; and
- Figure 8: is cross sectional view taken along the lines 8-8 of Figure 7.

### DESCRIPTION OF THE PREFERRED EMBODIMENTS

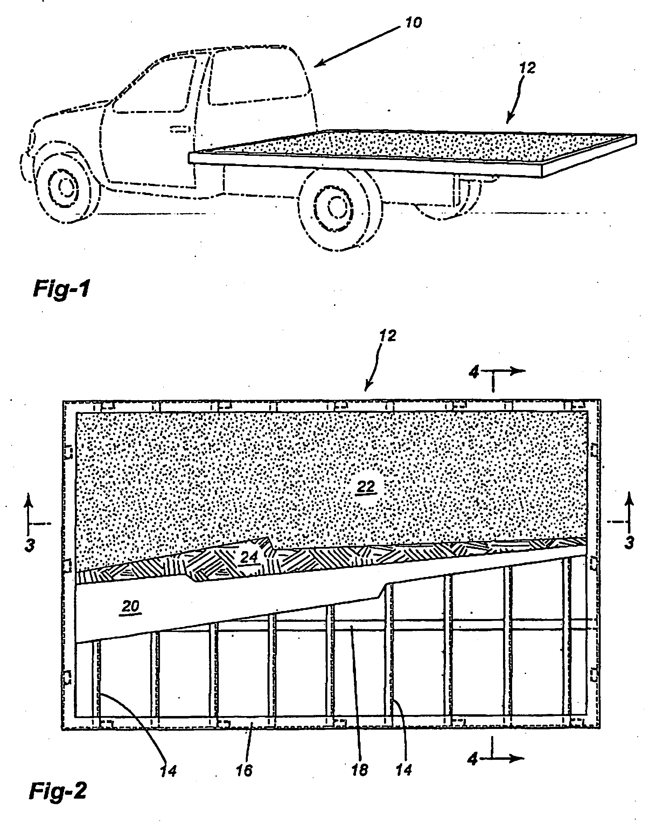

Referring to the drawings in greater detail and by reference characters thereto, there is illustrated in Figure 1 a truck which is generally designated by reference numeral 10 and which has a floor structure generally designated by reference numeral 12.

Floor structure 12 comprises a plurality of transversely extending C-shaped frame members 14. Extending around the outer edge are provided inverted L-shaped frame members 16.

Mounted to the underside of inverted L-shaped frame members 16 is a floor structure 12 having a bottom layer 120 and a top layer 122. Bottom layer 20, in the illustrated embodiments of Figures 1 to 4, comprises a thin metallic layer either of stainless steel or aluminium and preferably having a thickness of at least 30 mm. Top layer 22, which is of a composition as previously set forth hereinabove, is secured to bottom layer 20 by means of an adhesive layer 24.

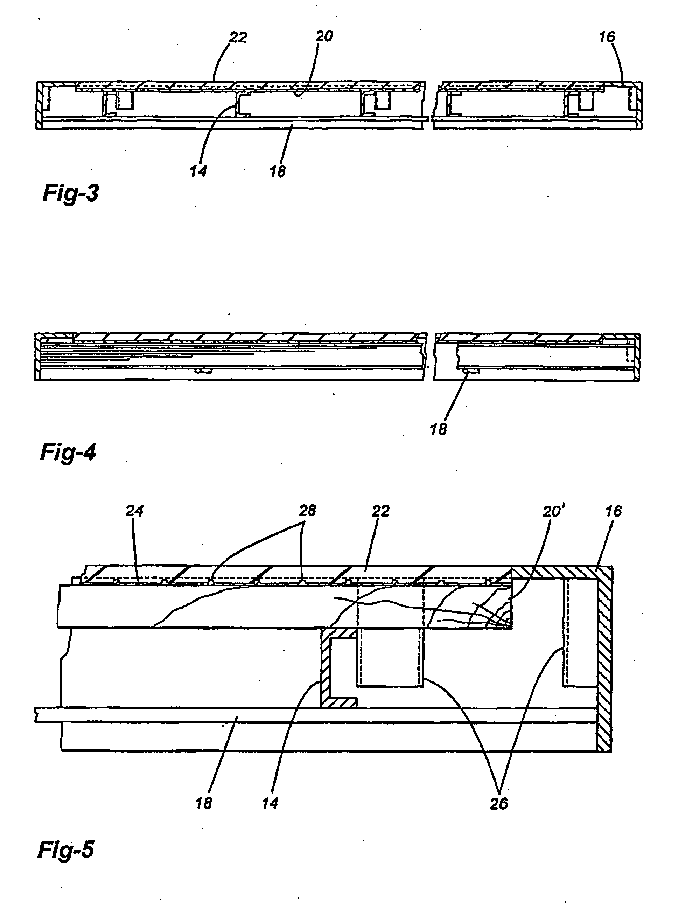

In the embodiment of Figure 5, there is provided a bottom layer 20' which is formed of a hardwood material, preferably between 15 and 30 mm thick. In this regard, layer 20' can be formed of suitable composite materials and manufactured materials as desired. In the bottom of rubber layer 22, there are provided a plurality of grooves 28.

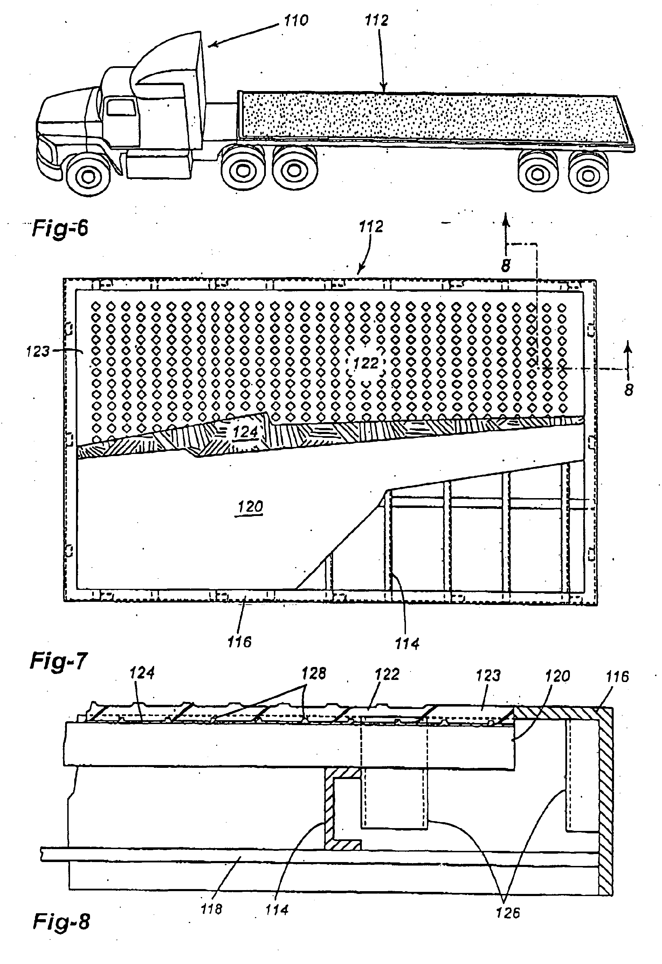

Turning to the embodiments illustrated in Figures 6 to 8, similar reference numerals in the 100's are employed for similar components.

In greater detail, there is illustrated a truck which is generally designated by reference numeral 10 and which has a floor structure 112 on a trailer unit. As previously described, floor structure 112 includes a plurality of transversely extending C-shaped frame members 114 with inverted L-shaped frame members 116 extending thereabout.

As may be seen in the drawings, floor structure 112 includes a bottom layer 120 and an inner top layer 122 secured by adhesive 124. Top layer 122 has an embossed surface while about the periphery of top layer 122, there is provided a second top layer 123 which has a lower hardness than central top layer 122. Moreover, peripheral top portion 123 has a smooth surface.

## Claims

1. A flooring product (12) suitable for use on a vehicle (10), the flooring product (12) comprising:
a base (20) formed of a load bearing material; and
an upper layer (22) being secured to said base (20);
the flooring product (12) being **characterized in that**:
the upper layer (22) is formed of rubber fragments bonded together; and
the base (20) is a metallic material or wood.

2. The flooring product (12) of claim 1, wherein the upper layer (22) is formed of at least a first portion (122) and a second portion (123), the first portion (122) and the second portion (123) each having a different hardness measurement.

3. The flooring product (12) of claim 2, wherein the first portion (122) comprises a central portion of the upper layer (22), and the second portion (123) is an outer portion at least partially located at a periphery of the upper layer (22).

4. The flooring product (12) of claim 1, wherein the metallic material is aluminum.

5. The flooring product (12) of claim 1, wherein the wood comprises a laminated wood product.

6. The flooring product (12) of claim 1, wherein the base (20) comprises a sheet material of aluminum and laminated wood.

7. The flooring product (12) of claim 6, wherein the laminated wood has a fiberglass coating on an underside thereof.

8. The flooring product (12) of claim 3, wherein the central portion has a hardness of between A76 to A90.

9. The flooring product (12) of claim 3, wherein the outer portion has a hardness of between A65 to A76.

10. The flooring product (12) of claim 3, wherein the central portion has an embossed surface and the outer portion has a smooth surface.

11. The flooring product (12) of claim 1, wherein the upper layer (22) has a thickness of between 10 mm and 20 mm.

12. A vehicle (10) having a floor (12) for receiving cargo, wherein the floor (12) is supported by structural members, and the floor (12) comprises a lower layer (20) formed of a load bearing material and an upper layer (22) being adhesively secured to the lower layer (20), the floor (12) being **characterized in that** he upper layer (22) is formed of rubber fragments bonded together; and the lower layer (20) is a metallic material or wood.

13. The vehicle (10) of claim 12, wherein the upper layer (22) comprises a first portion (122) and a second portion (123), the first portion (122) and the second portion (123) each having a different hardness measurement.

14. The vehicle (10) of claim 13, wherein the first portion (122) comprises a central portion of the upper layer (22), and the second portion (123) is an outer portion at least partially located at a periphery of the upper layer (22).

## Patentansprüche

1. Bodenstruktur (12) zur Verwendung auf einem Fahrzeug (10), mit einer Basis (20), die aus einem Lasten tragenden Material hergestellt ist, und einer oberen Lage (22), die mit der Basis (20) befestigt ist, **dadurch gekennzeichnet, dass** die obere Lage (22) aus miteinander verbundenen Gummiteilchen besteht und die Basis (20) ein metallisches Material oder Holz ist.

2. Bodenstruktur (12) nach Anspruch 1, **dadurch gekennzeichnet, dass** die obere Lage (22) aus mindestens einem ersten Teil (122) und einem zweiten Teil (123) besteht, wobei der erste Teil (122) und der zweite Teil (123) jeweils eine unterschiedliche Härte besitzt.

3. Bodenstruktur (12) nach Anspruch 2, **dadurch gekennzeichnet, dass** der erste Teil (122) einen zentrischen Teil der oberen Lage (22) darstellt und der zweite Teil (123) ein äußerer Teil ist, der mindestens teilweise an einem Umfang der oberen Lage (22) angeordnet ist.

4. Bodenstruktur (12) nach Anspruch 1, bei dem das metallische Material Aluminium ist.

5. Bodenstruktur (12) nach Anspruch 1, bei dem das Holz ein laminiertes Holzprodukt ist.

6. Bodenstruktur (12) nach Anspruch 1, bei dem die Basis (20) ein plattenförmiges Material aus Aluminium und laminiertem Holz ist.

7. Bodenstruktur (12) nach Anspruch 6, bei dem das laminierte Holz auf einer Unterseite einen Überzug aus Glasfaser aufweist.

8. Bodenstruktur (12) nach Anspruch 3, bei dem der zentrische Teil eine Härte von zwischen A76 bis A90 hat.

9. Bodenstruktur (12) nach Anspruch 3, bei dem der äußere Teil eine Härte von zwischen A65 bis A76 hat.

10. Bodenstruktur (12) nach Anspruch 3, bei dem der zentrische Teil eine Erhebungen aufweisende Oberfläche und der äußere Teil eine glatte Oberfläche besitzt.

11. Bodenstruktur (12) nach Anspruch 1, bei dem die obere Lage (22) eine Dicke von zwischen 10 mm und 20 mm besitzt.

12. Fahrzeug (10) mit einer Bodenstruktur (12) zur Aufnahme von Lasten, wobei die Bodenstruktur (12) durch Konstruktionselemente abgestützt ist und der Boden eine untere Lage (20), die aus einem Lasten tragenden Material besteht und eine obere Lage (22), die mit der unteren Lage (20) durch Klebeverbindung befestigt ist, aufweist, **dadurch gekennzeichnet, dass** die obere Lage (22) aus miteinander durch Kleben verbundene Gummiteilchen besteht und die untere Lage (20) ein metallisches Material oder Holz ist.

13. Fahrzeug (10) nach Anspruch 12, bei dem die obere Lage (22) einen ersten Teil (122) und einen zweiten Teil (123) aufweist, wobei der erste Teil (122) und der zweite Teil (123) jeweils einen unterschiedlichen Härtegrad besitzt.

14. Fahrzeug (10) nach Anspruch 13, bei dem der erste Teil (122) einen zentrischen Teil der oberen Lage (22) darstellt und der zweite Teil (123) ein äußerer Teil ist, der mindestens teilweise an einem Umfang der oberen Lage (22) angeordnet ist.

## Revendications

1. Structure de plancher (12) adaptée pour être utilisée sur un véhicule (10), la structure de plancher (12) comprenant :
une base (20) formée d'un matériau porteur ; et
une couche supérieure (22) fixée à ladite base (20) ;
la structure de plancher (12) étant **caractérisée en ce que** :
la couche supérieure (22) est formée de fragments de caoutchouc assemblés les uns aux autres ; et
la base (20) est faite d'un matériau métallique ou en bois.

2. Structure de plancher (12) selon la revendication 1, dans laquelle la couche supérieure (22) est formée d'au moins une première partie (122) et d'une seconde partie (123), la première partie (122) et la seconde partie (123) ayant chacune un indice de dureté différent.

3. Structure de plancher (12) selon la revendication 2, dans laquelle la première partie (122) comprend une partie centrale de la couche supérieure (22), et la seconde partie (123) est une partie externe au moins partiellement située à une périphérie de la couche supérieure (22).

4. Structure de plancher (12) selon la revendication 1, dans laquelle le matériau métallique est de l'aluminium.

5. Structure de plancher (12) selon la revendication 1, dans laquelle le bois comprend un produit de bois stratifié.

6. Structure de plancher (12) selon la revendication 1, dans laquelle la base (20) comprend un matériau en tôle d'aluminium et du bois stratifié.

7. Structure de plancher (12) selon la revendication 6, dans laquelle le bois stratifié a un revêtement en fibre de verre sur un côté inférieur de celui-ci.

8. Structure de plancher (12) selon la revendication 3, dans laquelle la partie centrale a une dureté allant de A76 à A90.

9. Structure de plancher (12) selon la revendication 3, dans laquelle la partie externe a une dureté allant de A65 à A76.

10. Structure de plancher (12) selon la revendication 3, dans laquelle la partie centrale a une surface gaufrée et la partie supérieure a une surface lisse.

11. Structure de plancher (12) selon la revendication 1, dans laquelle la couche supérieure (22) a une épaisseur allant de 10 à 20 mm.

12. Véhicule (10) ayant un plancher (12) pour recevoir un chargement, dans lequel le plancher (12) est supporté par des éléments structuraux, et le plancher (12) comprend une couche inférieure (20) formée d'un matériau porteur et une couche supérieure (22) fixé par adhésion à la couche inférieure (20), le plancher (12) étant **caractérisé en ce que** la couche supérieure (22) est formée de fragments de caoutchouc assemblés les uns aux autres ; et la couche inférieure (20) est faite d'un matériau métallique ou de bois.

13. Véhicule (10) selon la revendication 12, dans lequel la couche supérieure (22) comprend une première partie (122) et une seconde partie (123), la première partie (122) et la seconde partie (123) ayant chacune un indice de dureté différent.

14. Véhicule (10) selon la revendication 13, dans lequel la première partie (122) comprend une partie centrale de la couche supérieure (22), et la seconde partie (123) est une partie externe au moins partiellement située à une périphérie de la couche supérieure (22).
